# EUROPÄISCHE PATENTSCHRIFT

(11) **EP 2 138 751 B1**
(45) Veröffentlichungstag und Bekanntmachung des Hinweises auf die Patenterteilung: **20.02.2013**
(21) Anmeldenummer: 08011783.1
(22) Anmeldetag: 28.06.2008
(51) Int. Cl.: F16L 59/153

(54) **Verfahren zur Herstellung eines flexiblen wärmeisolierten Leitungsrohrs**
Method of manufacture of a flexible conduit pipe with thermal insulation
Procédé de fabrication d'un tuyau souple thermiquement isolé

(43) Veröffentlichungstag der Anmeldung: 30.12.2009
(73) Patentinhaber: Brugg Rohr AG, Holding, 5200 Brugg (CH)
(72) Erfinder: Rudi, Roberto, 5107 Schinznach-Dorf (CH); Dambowy, Christian, 5412 Gebenstorf (CH)
(74) Vertreter: Scheffler, Jörg

(56) Entgegenhaltungen:
- EP-A- 1 840 444
- EP-A1- 1 375 577
- WO-A-89/08220
- WO-A1-2004/046232
- DE-A1-102007 015 660
- US-A- 4 963 420
- US-A1- 2002 185 188
- US-A1- 2005 095 380
- US-A1- 2006 048 833
- US-A1- 2007 102 055
- US-A1- 2007 110 940
- P. BUNN AND J. T. MOTTRAM: "Manufacture and compression properties of syntactic foams", COMPOSITES1, vol. 24, no. 7, 1995, pages 565-571,

## Beschreibung

Die Erfindung betrifft ein Verfahren zur Herstellung eines flexiblen wärmeisolierten Leitungsrohrs.

Die US 2007/110940 A1 offenbart ein Verfahren zur Herstellung wärmeisolierten Leitungsrohrs bestehend aus zumindest einem mediumführenden Innenrohr, einem das zumindest eine Innenrohr umgebenden Außenrohr sowie einer zwischen dem zumindest einen Innenrohr und dem Außenrohr befindlichen Wärmedämmschicht auf der Basis von Polyurethan- oder Polyisocyanuratschaum, wobei dem Schaum Hohlkugeln mit einer Hülle aus einem thermoplastischen Kunststoff beigegeben werden, die mit einem Medium gefüllt sind, wobei dem Schaum 1, 2 oder 5 Gew.-% Hohlkugeln beigegeben sind.

Weiterhin offenbaren auch die US 20071102055 A1, die US 2006/048833 A1, die US 4963420A sowie die US 2002/185188A1 bereits wärmeisolierte Leitungsrohre mit einem Innenrohr und einem Außenrohr.

Aus der EP 0 897 788 B1 ist ein wärmeisoliertes Leitungsrohr bekannt, welches ein oder mehrere Innenrohre, eine das oder die Innenrohre umgebende Wärmedämmschicht sowie ein Kunststoffaußenrohr aufweist. Das Außenrohr ist zwecks Verbesserung der Flexibilität mit einer leichten Wellung versehen. Die Wärmedämmschicht besteht aus Polyurethanschaum, welcher aus einem Gemisch aus Polyol und Isocyanat besteht, welches in den Spalt zwischen dem oder den Innenrohren und dem Außenrohr eingebracht wird und dort ausschäumt.

Die Herstellung des Polyurethanschaums ist Gegenstand der EP 1 371 469 B1. Die in den Spalt einzubringende Mischung wird dadurch hergestellt, dass Polyol, ein Treibmittel und Luft einem Statischmischer zugeführt und dort vermischt werden und dieses Gemisch mit Isacyanat in einem dynamischen Mischer vermischt wird. Das auf diese Welse hergestellte Gemisch wird in den Spalt zwischen dem oder den Innenrohren eingebracht, wo es aufschäumt.

Obwohl alle verwendeten Materialien, wie Kunststoff für das oder die Innenrohre und das Außenrohr, die Wellung des Außenrohrs das Leitungsrohr relativ flexibel machen, ist die Verwendung des Leitungsrohrs für manche Fälle nicht möglich.

Das nach den beschriebenen Dokumenten hergestellte wärmeisolierte Leitungsrohr findet bevorzugt Anwendung als Hausanschlussleitung für die Femwärmeversorgung. Hier kommt es häufig vor, dass das Leitungsrohr um enge Radien gebogen werden muss, um beispielsweise Bauwerke, schützenswerte Bäume etc. zu umgehen.

Weiterhin ist es wünschenswert, das Leitungsrohr auf Trommeln mit einem geringen Trommelkemdurchmesser aufzuwickeln und auf diesen an die Montagestelle zu transportieren.

Der vorliegenden Erfindung liegt von daher die Aufgabe zugrunde, das bekannte Leitungsrohr im Hinblick auf seine Biegbarkeit zu verbessern. Diese Aufgabe wird durch die Merkmale des Anspruchs 1 gelöst.

Der wesentliche Vorteil der Erfindung ist darin zu sehen, dass durch die Hohlkugeln, die durch die beim Schäumprozess entstehende Wärme aufblähen, der fertige Schaum elastischer wird und infolgedessen das Leitungsrohr an Flexibilität gewinnt. Die in dem Polyurethanschaum fein verteilten Hohlkugeln fungieren in der Polyurethanstruktur als flexible Pufferbereiche, sodass der entstandene Polyurethanschaum weniger hart ist und bei äußerer Belastung nachgeben kann. Die daraus resultierende verringerte Quersteifigkeit des Leitungsrohrs kann in Kauf genommen werden, da hohe Verkehrslasten im Bereich eines Hausanschlusses nicht zu erwarten sind.

Der flexible Polyurethanschaum lässt bei einer Krafteinwirkung eine gewisse Kompression zu. Dies hat beim Rohrbiegen einen positiven Effekt dahingehend, dass die Biegesteifigkeit des Leitungsrohrs, bei welchem das Kunststoff-Innenrohr, der Polyurethanschaum und das Kunststoff-Außenrohr einen Verbund bilden, verringert wird. Das führt dazu, dass beim Biegen des Leitungsrohrs um enge Radien Brüche im Schaum nicht bzw. minimiert zu erwarten sind. Hierdurch werden potentielle Wärmebrücken reduziert, wodurch die Wärmedämmung insgesamt verbessert wird.

Der Anteil an den Hohlkugeln beträgt vorteilhafterweise 1 bis 5 Gew.%.

Die Hohlkugeln liegen in dem fertigen Schaum im aufgeblähten Zustand vor. Während des Aufschäumvorgangs wird Wärme frei, durch die die Kunststoffhülle der Hohlkugeln erweicht und der im Innern der Hohlkugeln entstehenden Druckerhöhung nachgeben kann und ihren Durchmesser vergrößert.

Die Hohlkugeln können dem Polyol, dem Isocyanat, dem Treibmittel oder dem Gemisch aus Polyol, Isocyanat und Treibmittel zugegeben werden. Wesentlich dabei ist jedoch, dass eine Temperaturerhöhung über die Erweichungstemperatur der Hülle der Hohlkugeln erst dann erreicht wird, wenn das Schaumstoffgemisch in den Spalt zwischen Innen- und Außenrohr gelangt ist.

Das im Innern der Hohlkugeln befindliche Medium kann zu jedem Zeitpunkt entweder im flüssigen oder gasförmigen Zustand vorliegen. Dies hängt lediglich von der Siedetemperatur des Mediums ab. Wichtig ist nur, dass während des Aufschäumvorgangs unmittelbar nach dem Einbringen des Schaums in den Spalt ein Aufblähen der Hohlkugeln ermöglicht wird.

Die Erfindung ist anhand der folgenden Ausführungsbeispiele näher beschrieben
- 36 g Polyol
- 70 g Isocyanad
- 2,2 g Hohlkugeln
werden miteinander vermischt und in einem Becher frei aufgeschäumt. Als Treibmittel wird CO2 verwendet.

In einem zweiten Ausführungsbeispiel wurden
- 50 g Polyol
- 65,5 g Isocyanat
- 2,3 g Cyclopentan (Treibmittel)
- 2,4 g Hohlkugeln
miteinander vermischt und in einem Becher frei aufgeschäumt.

Durch Finger-Druck-Probe konnte gegenüber einer Referenzprobe aus mit gleichen Stoffen hergestelltem Schaum, der keine Hohlkugeln enthielt, festgestellt werden, dass der Schaum nach der Lehre der Erfindung wesentlich elastischer und nachgiebiger war als der bisher bekannte Schaum.

## Patentansprüche

1. Verfahren zur Herstellung eines flexiblen wärmeisolierten Leitungsrohrs bestehend aus zumindest einem mediumführenden Innenrohr, einem das zumindest eine Innenrohr umgebenden Außenrohr sowie einer zwischen dem zumindest einen Innenrohr und dem Außenrohr befindlichen Wärmedämmschicht auf der Basis von Polyurethan- oder Polyisocyanuratschaum, der in den Spalt zwischen Innen- und Auβenrohr eingebracht wird, eingebracht wird, wobei dem Schaum 0,1 bis 7,5 Gew.-% Hohlkugeln mit einer Hülle aus einem thermoplastischen Kunststoff beigegeben werden, wobei die Hohlkugeln mit einem Medium gefüllt sind, welches bei einer durch die während des Aufschäumvorgangs frei werdende wärme erhöhten Temperatur ein Aufblähen der Hülle bewirkt, und wobei die Temperatur erst dann Ober die Erweichungstemperatur der Hülle der Hohlkugeln erhöht wird, wenn das Schaumstoffgemisch in den Spalt zwischen Innen- und Außenrohr gelangt.

2. Verfahren nach Anspruch 1, **dadurch gekennzeichnet, dass** der Anteil an den Hohlkugeln zwischen 1 und 5 Gew.-% beträgt.

3. Verfahren nach einem der vorhergehenden Ansprüche, **dadurch gekennzeichnet, dass** die Komponenten des Polyurethanschaums Polyol und Isocyanat in einer Mischkammer vermischt werden und das Gemisch in den Ringspalt zwischen dem Innenrohr und dem Außenrohr eingeführt wird und dass die Hohlkugeln dem Polyol, dem Isocyanat, dem Treibmittel oder dem Gemisch aus Polyol, Isocyanat und Treibmittel in der Mischkammer zugegeben werden.

## Claims

1. Process for producing a flexible thermally insulated conduit pipe composed of at least one internal pipe that conducts a fluid, of an external pipe surrounding the at least one internal pipe, and also of a thermal insulation layer located between the at least one internal pipe and the external pipe and based on polyurethane foam or polyisocyanurate foam, which is introduced into the gap between internal pipe and external pipe, where from 0.1 to 7.5% by weight of hollow spheres with a shell made of a thermoplastic are added to the foam, where the hollow spheres comprise a fluid which, at a temperature increased by the heat liberated during the foaming procedure, brings about inflation of the shell, and where the temperature is not increased above the softening point of the shell of the hollow spheres until the foam mixture passes into the gap between internal and external pipe.

2. Process according to Claim 1, **characterized in that** the proportion of the hollow spheres is from 1 to 5% by weight.

3. Process according to either of the preceding claims, **characterized in that** the components of the polyurethane foam, polyol and isocyanate, are mixed in a mixing chamber, and the mixture is introduced into the annular gap between the internal pipe and the external pipe, and that the hollow spheres are added to the polyol, to the isocyanate, to the blowing agent or to the mixture made of polyol, isocyanate and blowing agent, in the mixing chamber.

## Revendications

1. Procédé pour la fabrication d'un tuyau souple calorifugé, constitué d'au moins un tube interne conduisant un milieu, d'un tube externe entourant ledit au moins un tube interne ainsi que d'une couche de calorifugeage, se trouvant entre ledit au moins un tube interne et le tube externe, à base de mousse de polyuréthane ou polyisocyanurate qui est introduite dans l'espace entre tube interne et tube externe, à la mousse étant ajoutés 0,1 à 7,5 % en poids de sphères creuses comportant une enveloppe à base d'une matière synthétique thermoplastique, les sphères creuses étant remplies d'un milieu qui, à une température élevée par la chaleur dégagée au cours du processus de moussage, provoque un gonflement de l'enveloppe, et la température n'étant alors élevée au-dessus de la température de ramollissement de l'enveloppe des sphères creuses que lorsque le mélange à base de mousse arrive dans l'espace entre tube interne et tube externe.

2. Procédé selon la revendication 1, **caractérisé en ce que** la proportion des sphères creuses est comprise entre 1 et 5 % en poids.

3. Procédé selon l'une quelconque des revendications précédentes, **caractérisé en ce que** les composants de la mousse de polyuréthane polyol et isocyanate sont mélangés dans une chambre de mélange et on introduit le mélange dans l'espace annulaire entre le tube interne et le tube externe et **en ce que** dans la chambre de mélange on ajoute les sphères creuses au polyol, à l'isocyanate, à l'agent d'expansion ou au mélange de polyol, isocyanate et agent d'expansion.
